# EUROPÄISCHE PATENTANMELDUNG

(11) **EP 4 249 231 A1**
(43) Veröffentlichungstag der Anmeldung: **27.09.2023**
(21) Anmeldenummer: 23160822.5
(22) Anmeldetag: 08.03.2023
(51) Int. Cl.: B32B 1/08, B32B 5/02, B32B 25/02, B32B 25/10, B32B 25/14

(54) **SCHLAUCH FÜR BATTERIEKÜHLSYSTEME AUF BASIS VON HNBR**

(30) Priorität: 24.03.2022 DE 102022202884
(71) Anmelder: ContiTech Techno-Chemie GmbH, 61184 Karben (DE)
(72) Erfinder: Ackermann, Michael, 30165 Hannover (DE); Kiel, Christian, 30165 Hannover (DE); Linzmaier, Markus, 30165 Hannover (DE); Mroz, Michael, 30165 Hannover (DE)
(74) Vertreter: Continental Corporation

(57) **Zusammenfassung**

Die Erfindung betrifft einen Schlauch für ein Batteriekühlsystem, der eine innere Schicht aus hydriertem Acrylnitrilbutadienkautschuk (HNBR), eine Zwischenschicht aus Verstärkungsfasern oder Verstärkungsgewebe und eine äußere Schicht aus hydriertem Acrylnitrilbutadienkautschuk umfasst. Eine derartige Schlauchkonstruktion ermittelt ausgezeichnete Barriereeigenschaften gegenüber dem Durchtritt von Wasser und dielektrischen Kühlfluiden, so dass die Schläuche für Kühlsystemanwendungen für elektronische Komponenten wie Batterien eingesetzt werden können. Die vorliegende Erfindung betrifft weiterhin die Verwendung solcher Schläuche zur Förderung von Wärmeübertragungsfluid, eine Batterie, die einen solchen schlauch enthält und Fahrzeuge, die entsprechende Batterien enthalten.

## Beschreibung

Die Erfindung betrifft einen Schlauch für ein Batteriekühlsystem, der eine innere Schicht aus hydriertem Acrylnitrilbutadienkautschuk (HNBR), eine Zwischenschicht aus Verstärkungsfasern oder Verstärkungsgewebe und eine äußere Schicht aus hydriertem Acrylnitrilbutadienkautschuk umfasst. Die vorliegende Erfindung betrifft weiterhin die Verwendung solcher Schläuche zur Förderung von Wärmeübertragungsfluid, eine Batterie, die einen solchen Schlauch enthält und Fahrzeuge, die entsprechende Batterien enthalten.

### Stand der Technik

Batteriezellen sind als saubere, effiziente und umweltverantwortliche Energiequelle für Elektrofahrzeuge und eine Vielzahl von anderen Anwendungen nicht mehr wegzudenken. Ein wichtiger Typ von Batteriezellen sind dabei insbesondere Lithiumionen-Batterien, die wiederaufladbar sind und zu einer Vielzahl von Gestaltungen und Größen geformt werden können, um in Elektrofahrzeugen verfügbaren Raum effizient zu füllen. In einer Batteriepackung können mehrere einzelne Batteriezellen vorgesehen werden, um einen zum Betreiben von Elektrofahrzeugen ausreichenden Leistungsbetrag vorzusehen.

Typische z.B. zylindrische Batteriezellen weisen ein Paar von kunststoffbeschichteten Metallschichten auf, die um einen Umfang der Batteriezelle schmelzgeschweißt sind, um die Batteriezellenkomponenten abzudichten. Das Abdichten der Batteriezellen beginnt im Allgemeinen damit, dass eine der kunststoffbeschichteten Metallschichten mit einem Hohlraum versehen wird, der manchmal als "Butterdosen"-Form bezeichnet wird. Die Batteriezellenkomponenten werden in dem Hohlraum der kunststoffbeschichteten Metallschicht angeordnet. Die andere der kunststoffbeschichteten Metallschichten wird dann oben auf die Batteriezellenkomponenten gesetzt und an dem Umfang an die eine der kunststoffbeschichteten Metallschichten mit dem Hohlraum zum Beispiel durch Heißversiegeln um die Ränder schmelzgeschweißt. Dadurch wird die Batteriezelle für den Einbau in einer Batteriepackung vorgesehen. Durch Aufrollen können solche Batteriewellen in eine zylindrische Form gebracht werden.

Batteriezellen, wie etwa Lithiumionen-Batteriezellen, erzeugen bekanntermaßen während des Betriebs und infolge eines Ladezyklus beim (Wieder)Aufladen Wärme. Werden sie überhitzt oder anderweitig Umgebungen hoher Temperatur ausgesetzt, kann dies unerwünschte Auswirkungen auf den Betrieb der Lithiumionen-Batterien haben. Zur Vermeidung solcher unerwünschten Effekte werden daher bei Lithiumionen-Batteriepackungen typischerweise Kühlsysteme genutzt, um einer Überhitzung entgegenzuwirken.

Konventionelle Kühlsysteme umfassen beispielsweise Kühlplatten oder - rippen, die schichtartig zwischen einzelnen Batteriezellen in der Batteriepackung angeordnet sind. Ein solches Kühlsystem kann Kanäle aufweisen, durch die ein Kühlmittel in einer Wärmeaustauschbeziehung mit den Batteriezellen strömt. Nicht beschränkende Beispiele bekannter Kühlsysteme für Batteriezellen sind beispielsweise in der US 8,383,260 B2 oder in der US 8,435,668 B2 beschrieben.

In der US 8,852,772 B2 wird ein Batteriekühlsystem beschrieben, bei dem zur Kühlung eine dielektrische Flüssigkeit genutzt wird. Während des Betriebs des Kühlsystems wird diese Flüssigkeit mittels einer Pumpe in einem Kreislauf gepumpt, bei dem sie bei Kontakt mit den Batteriezellen Wärme von diesen aufnimmt und diese bei Passieren eines Wärmetauschers wieder an die Umgebung abgibt. Die dielektrischen Kühlflüssigkeiten zeichnen sich durch gute isolierende Eigenschaften aus und haben eine für die Aufnahme von Wärme aus den Batteriezellen geeignete Wärmekapizität. Die dielektrische Kühlflüssigkeit kann auch zum Erhitzen der Batteriezellen auf die Betriebstemperatur genutzt werden, indem die Kühlflüssigkeit so ausgewählt wird, dass ihr Siedepunkt im Bereich der Betriebstemperatur der Batteriezellen liegt und diese als Kondensationspunkte für verdampfte Kühlflüssigkeit genutzt werden.

Das Prinzip einer Kühlung mit in Kühlflüssigkeit eingetauchten elektronischen Komponenten ist aus als "immersion cooling" beispielsweise für die Kühlung von Microchips und Servern bekannt.

Nachteilig an den hier verwendeten dielektrischen Flüssigkeiten ist allerdings deren nicht unerhebliche Aufnahmefähigkeit für Wasser und der Umstand, dass diese Flüssigkeiten durch viele Polymermaterialien migrieren können. Wenn die dielektrische Flüssigkeit Wasser z.B. aus einer umgebenden Atmosphäre aufnimmt, kann dieses während des Kontakts mit elektronischen Komponenten der Batterie zu Schädigungen führen, die deren Funktionsweise beeinträchtigen oder sogar eine Zerstörung der Batterie zu Folge haben können. Entsprechend müssen Schläuche, die für die Förderung solcher Flüssigkeiten eingesetzt werden, zum einen sehr gute Barriereeigenschaften gegenüber potentiell von außen in den Schlauch eindringendem Wasser und andererseits gute Barriereeigenschaften gegenüber dem in der Leitung geförderten dielektrischen Fluid aufweisen.

Zwar können derartige Eigenschaften auch durch vollständig aus Metall gebildete Kühlsysteme bereitgestellt werden, dies ist aber wegen des höheren Gewichts und der entsprechenden höheren Kosten für solche Konstruktionen für Mobilitätsanwendungen keine wirkliche Option. Auch in Bezug auf während des Betriebs auftretende Vibrationen und damit verbundene Geräuschentwicklung sind vollständig aus Metall gebildete Kühlsysteme meist nicht zufriedenstellend.

Vor diesem Hintergrund besteht ein Bedarf für ein Schlauchsystem, das bei einem möglichst einfachen Aufbau eine möglichst hohe Barrierewirkung gegenüber dem Durchtritt von Wasser von außen nach innen und eine möglichst hohe Barrierewirkung gegenüber von durch den Schlauch geleitete dielektrische Flüssigkeit aufweist. Entsprechende Schläuche sollten zudem möglichst aus kostengünstig verfügbaren Materialien herstellbar sein und über den Lebenszyklus des Kühlsystems möglichst stabile mechanische Eigenschaften zeigen.

Die vorliegende Erfindung befasst sich mit diesem Bedarf.

### Detaillierte Beschreibung der Erfindung

In den dieser Erfindung zugrundeliegenden Untersuchungen wurde überraschend gefunden, dass Schläuche mit günstigen Barrierewirkungen und guter Haltbarkeit durch einen Schichtaufbau mit einer inneren Schicht aus hydriertem Acrylnitrilbutadienkautschuk (HNBR), einer Zwischenschicht aus Verstärkungsfasern oder Verstärkungsgewebe und einer äußeren Schicht aus hydriertem Acrylnitrilbutadienkautschuk bereitgestellt werden können.

Demzufolge betrifft die vorliegende Erfindung in einen ersten Aspekt einen Schlauch für ein Batteriekühlsystem, der eine innere Schicht aus hydriertem Acrylnitrilbutadienkautschuk (HNBR), eine Zwischenschicht aus Verstärkungsfasern oder Verstärkungsgewebe und eine äußere Schicht aus hydriertem Acrylnitrilbutadienkautschuk aufweist. In solchen Schläuchen wird die Barrierewirkung im Wesentlichen durch das Material der äußeren und inneren Schicht (HMBR) realisiert, während die Zwischenschicht aus Verstärkungsfasern oder Verstärkungsgewebe die Haltbarkeit des Schlauchs gegenüber von innen auf den Schlauch wirkenden Drücken verbessert. Da die innere und äußere Schicht der Schläuche aus dem gleichen Material "HNBR" gebildet sind und die Schichten als solche die erforderlichen guten Barrierewirkung vermitteln, kann auf einen komplizierten Schlauchaufbau mit zusätzlichen Barriereschichten verzichtet werden, was sich bei den Kosten der Schläuche als wesentlicher Vorteil bemerkbar macht.

Als Material für die Verstärkungsfasern oder das Verstärkungsgewebe kann im Prinzip jedes Material verwendet werden, dass in Schläuchen zu Verstärkungszwecken eingesetzt werden kann. Aus Gründen der Verfügbarkeit und den erforderlichen Eigenschaften ist es bevorzugt, wenn die Verstärkungsfasern oder das Verstärkungsgewebe ein Polyamid enthalten. Weiter bevorzugt handelt es sich bei dem Polyamid um ein aromatisches Polyamid. Die Verstärkungsfasern oder das Verstärkungsgewebe kann ein solches Polyamid als Komponente mit anderen Komponenten und/oder Fasern (wie Polyesterfasern) enthalten oder ausschließlich aus einem Polyamid und insbesondere einem aromatischen Polyamid gebildet sein. In einer bevorzugten Ausführungsform ist die Verstärkungsfasern oder das Verstärkungsgewebe ausschließlich aus einem Polyamid (als Polymerkomponente) gebildet ist.

Hinsichtlich des Aufbaus des hydrierten Acrylnitrilbutadienkautschuks, der in der inneren und äußeren Schicht verwendet wird, unterliegen die hier beschriebenen Schläuche ebenfalls keinen relevanten Beschränkungen, wobei der Acrylnitrilbutadienkautschuk der inneren Schicht der gleiche oder ein anderer sein kann als der Acrylnitrilbutadienkautschuk der äußeren Schicht. Die Angabe "hydriert" bezeichnet hierbei den Umstand, dass Doppelbindungen, die im Acrylnitrilbutadienkautschuk insbesondere auf einpolymerisiertes Butadien zurückgehen, hydriert sind.

Ein bevorzugter hydrierter Acrylnitrilbutadienkautschuk, der für die Herstellung der inneren und/oder der äußeren Schicht des erfindungsgemäßen Schlauchs herangezogen werden kann, weist eine oder mehrere der folgenden Eigenschaften auf:
(i) einen Acrylnitrilgehalt im Bereich von 25 bis 45 Gew.-% und bevorzugt 35 bis 45 Gew.-%;
(ii) einen Sättigungsgrad, bestimmt als lodwert in mg/100 mg Kautschuk im Bereich von 3 bis 30 (lod (I₂) reagiert unter Entfärbung mit Doppelbindungen, der lodwert bezeichnet die Menge an Iod (in mg/100 mg Kautschuk), die zugegeben werden kann und bei der gerade noch Entfärbung beobachtet wird);
(iii) eine Glasübergangstemperatur im Bereich von -40°C bis -20°C (bestimmt gemäß DSC).

Zur Vermittlung einer elektrischen Leitfähigkeit, mit der elektrostatische Aufladung der erfindungsgemäßen Schläuche vermieden werden kann, kann ein elektrisch leitfähiger Zusatzstoff in die innere und/oder äußere Schicht des Schlauchs einbezogen werden. Ein geeigneter elektrisch leitfähiger Zusatzstoff ist beispielsweise Ruß. Zur Vermittlung geeigneter Eigenschaften beträgt die in die innere und/oder äußere Schicht des Schlauchs einbezogene Menge des elektrisch leitfähigen Zusatzstoffs, insbesondere von Ruß, vorzugsweise 80 bis 200 phr und insbesondere 100 bis 150 phr (parts per hundred rubber).

Darüber hinaus kann die innere und/oder äußere Schicht des erfindungsgemäßen Schlauchs ein oder mehrere weitere Additive bzw. Zusatzstoffe enthalten, die insbesondere ausgewählt sind aus Füllstoffen, z.B. in Form von Rußtypen, Zinkoxid (z.B. als weißes Farbmittel), Antioxidationsmitteln, Vernetzern (oder nach der Vernetzung verbleibenden Resten davon), oder Weichmachern.

Der Anteil der weiteren Zusatzstoffe in der inneren und/oder äußeren Schicht beträgt vorzugsweise 20 bis 150 phr und bevorzugt 50 bis 100 phr.

Der in die innere und/oder äußere Schicht des erfindungsgemäßen Schlauchs einbezogenen hydrierte Acyrlnitrilbutadienkautschuk ist vorzugsweise vernetzt, besonders bevorzugt ist es, wenn der Acyrlnitrilbutadienkautschuk in der inneren und äußeren Schicht vernetzt ist. Die Vernetzung kann durch jedes für die Vernetzung von Acyrlnitrilbutadienkautschuk geeignete Vernetzungssystem realisiert werden, wobei jedoch eine Peroxidvernetzung als besonders günstig angegeben werden kann. Ein zu diesem Zweck verwendbarer Peroxidvernetzer ist beispielsweise Di-tert-butylperoxyisopropylbenzol. Zur Förderung der Vernetzung können Verbindungen mit zwei oder mehr reaktiven Doppelbindungen zugesetzt werden, wie beispielsweise Triallylisocyanurat oder Diallylphthalat.

Im Prinzip kann der erfindungsgemäße Schlauch in jeder Dimensionierung und Länge ausgebildet sein, insbesondere wird der Schlauch aber eine Dimensionierung aufweisen, die ein Batteriekühlsystem und insbesondere für ein Kühlsystem für Lithiumionenbatterien, bevorzugt in Automobilanwendungen, geeignet ist. Für einen hier geeigneten Durchsatz von Kühlungsfluid ist ein Innendurchmesser des Schlauchs in Bereich von 5 bis 25 mm bevorzugt und ein und Innendurchmesser von 7 bis 20 mm weiter bevorzugt. Die Wanddicke ist zweckmäßig auf die Belastung, die der Schlauch während seiner bestimmungsgemäßen Benutzung ausgesetzt ist, abgestimmt, wobei sich eine Wanddicke im Bereich von 2 bis 5 mm und bevorzugt von 3 bis 4 mm für die meisten Zwecke als ausreichend herausgestellt hat.

Wie vorstehend erwähnt vermitteln die oben angegebenen Schlauchschichten dem Schlauch die gewünschten vorteilhaften Eigenschaften ohne dass weitere Schichten oder Materialien in den Schlauch einbezogen werden müssen. Während entsprechend das Vorliegen von weiteren Schichten, z.B. zwischen der Zwischenschicht aus Verstärkungsfasern oder Verstärkungsgewebe und der inneren oder äußeren Schicht aus hydriertem Acrylnitrilbutadienkautschuk, nicht ausgeschlossen und von der Erfindung umfasst ist, ist der erfindungsgemäße Schlauch in einer bevorzugten Ausführungsform ausschließlich aus der inneren Schicht aus hydriertem Acrylnitrilbutadienkautschuk, der Zwischenschicht aus Verstärkungsfasern oder Verstärkungsgewebe und der äußeren Schicht aus hydriertem Acrylnitrilbutadienkautschuk gebildet.

Die Schicht aus Verstärkungsfasern oder Verstärkungsgewebe kann als kompakt undurchlässige Schicht oder als durchlässige Schicht ausgebildet sein, so dass in einem Schichtverbund aus innerer Schicht/Verstärkungsfaser- bzw. Verstärkungsgewebeschicht/äußere Schicht Material aus der inneren und äußeren Schicht in direktem Kontakt stehen kann (in Poren oder Maschen der Verstärkungsfaser- bzw. Verstärkungsgewebeschicht).

Zusätzlich oder alternativ dazu ist es bevorzugt, wenn der erfindungsgemäße Schlauch eine Wassereintrittsrate (bestimmt gemäß SAE J 3062-2021) von weniger als 0,4 g/cm²/Jahr und insbesondere weniger als 0,3 g/cm²/Jahr aufweist.

In einem weiteren Aspekt betrifft die vorliegende Erfindung die Verwendung eines Schlauchs, wie er im vorstehenden beschrieben wurde, in einem Batteriekühlsystem, bei dem Komponenten der Batterie mit Hilfe eines Wärmeübertragungsfluid, dass durch den Schlauch geleitet wird, gekühlt werden. Für nähere Ausgestaltungen eines solchen Batteriekühlsystems kann auf die entsprechenden Ausführungen hierzu in der DE 10 2012 220 537 A1 verwiesen werden.

In einem noch weiteren Aspekt betrifft die vorliegende Erfindung eine Batterie, die zumindest eine Batteriezelle und ein Batteriekühlsystem mit einer Pumpe, einem Wärmetauscher und mindestens einem Schlauch wie vorstehend beschrieben umfasst. Bevorzugt umfasst die Batterie mehrere Batteriezellen. Die Batteriezellen sind dabei vorzugsweise als mehrere in einem Gehäuse angeordnet, an das ein entsprechender Schlauch angeschlossen ist und durch den mittels der Pumpe ein Kühlfluid in das Gehäuse geleitet werden kann. Alternativ oder zusätzlich verbindet der erfindungsgemäße Schlauch ein solches Gehäuse mit einem Wärmetauscher und/oder den Wärmetauscher mit der Pumpe.

Das Batteriekühlsystem der Batterie wird vorzugsweise mit einem Wärmeübertragungsfluid betrieben, so dass die beschriebene Batterie vorzugsweise so ausgebildet ist, dass das Batteriekühlsystem mit einem Wärmeübertragungsfluid gefüllt ist. Zweckmäßig handelt es sich bei dem Wärmeübertragungsfluid um ein dielektrisches Wärmeübertragungsfluid. Besonders geeignete dielektrische Wärmeübertragungsfluide sind beispielsweise aromatische synthetische dielektrische Öle, Pentaerythritolestern mit geradkettigen oder verzweigten C5 bis C12-Carbonsäuren, Methoxyheptafluorpropan, oder gas-to-liquid-synthetischen Ölen, insbesondere in Form von verzweigten, zyklischen und/oder linearen C18 bis C50-Kohlenwasserstoffen werden können.

Als aromatische synthetische dielektrische Öle können insbesondere die in FR 3 106 345 A1 beschriebenen Substanzen verwendet werden, z.B., aber nicht beschränkt auf, Alkylbenzole, Alkyldiphenylethane (zum Beispiel Phenyloxyxlyethan (PXE), Phenylethylphenylethan (PEPE), Mono-Isopropylbiphenyl (MIPB), 1,1-Diphenylethan (1,1-Diphenylethan) - DPE)), Alkylnaphthaline (zum Beispiel Di-Iso-Propylnaphthalin (DIPN)), Methylpolyarylmethane (z.B. Benzyltoluol (BT) und Dibenzyltoluol DBT) und Mischungen davon. In diesen aromatischen synthetischen dielektrischen Ölen bzw. Fluiden versteht es sich, dass mindestens ein Ring aromatisch ist und dass optional ein oder mehrere andere vorhandene(n) Ring(e) teilweise oder vollständig ungesättigt sein können. Ebenso können die in FR 3 106 345 A1 in den Absätzen [0041] bis [0054] beschrieben Materialien als dielektrisches Wärmeübertragungsfluid verwendet werden, die hiermit im Rahmen der Bezugnahme in die Anmeldung aufgenommen sein sollen.

Neben der dielektrischen Komponente, die wesentlich für die Wirkung des Kühlsystems verantwortlich ist, kann das Wärmeübertragungsfluid zusätzliche Additive enthalten, die insbesondere ausgewählt sind aus Antioxidantien, Passivatoren, Pourpoint-Erniedriger, Zersetzungsinhibitoren, Duft- und Geschmacksstoffe, Farbstoffe, Konservierungsmittel und dergleichen und Mischungen davon.

Das im Rahmen der vorliegenden Erfindung verwendete Wärmeübertragungsfluid weist bevorzugt einen spezifischen Durchgangswiderstand von größer oder gleich 10⁷ Ω.cm und vorzugsweise größer oder gleich 10⁸ Ω.cm auf. Der spezifische Widerstand eines Materials beschreibt seine Fähigkeit, dem Fluss des elektrischen Stroms entgegenzuwirken. Mit anderen Worten ist der spezifische Durchgangswiderstand ein Hinweis auf die dielektrischen Eigenschaften des dielektrischen Fluids. Der spezifische Durchgangswiderstand wird gemäß der Norm IEC 60247, Ausgabe 2004, gemessen.

Bevorzugt weist das Wärmeübertragungsfluid einen spezifischen Durchgangswiderstand von 10⁷ Ω.cm bis 5 × 10⁷ Ω.cm oder von 5 × 10⁷ Ω.cm bis 10⁸ Ω.cm oder von 10⁸ Ω.cm bis 5 × 10⁸ Ω.cm oder von 5 × 10⁸ Ω.cm bis 10⁹ Ω.cm oder von 10⁹ Ω.cm bis 5 × 10⁹ Ω.cm oder von 5 × 10⁹ Ω.cm bis 10¹⁰ Ω.cm auf.

Bei der Batterie gemäß der vorliegenden Erfindung handelt es sich bevorzugt um eine Alkalimetallionenbatterie (insbesondere auf Basis von Li oder Na) und bevorzugt um eine Lithiumionenbatterie. Da ein Batteriekühlsystem aber in der Regel keine Wechselwirkungen mit der Chemie einer Batterie aufweist kann das Kühlsystem auch Bestandteil von Batterien mit anderer Basischemie (z.B. Ni-H oder Erdalkaliionen) sein. Für die erfindungsgemäße Batterie ist es weiterhin bevorzugt, wenn das Batteriekühlsystem so ausgestaltet ist, dass die mindestens eine Batteriezelle während des Betriebs des Batteriekühlsystems von dem Wärmeübertragungsfluid umströmt wird, d.h. es besteht nicht nur eine planare Kontaktoberfläche auf einer Seite der Batteriezelle, über das das Wärmeübertragungsfluid mit der Batteriezelle in Kontakt steht, sondern das Wärmeübertragungsfluid um die Batteriezelle herumfließen. Dadurch kann ein guter Abtransport von Wärme aus der oder den Batteriezellen gewährleistet werden.

In einem noch weiteren Aspekt betrifft die vorliegende Erfindung ein Fahrzeug, dass mindestens eine wie vorstehend beschriebene Batterie aufweist. Die Art des Fahrzeugs ist nicht in relevanter Weise beschränkt, so dass es sich z.B. um ein Schienenfahrzeug, wie einen Zug oder Zugtriebwagen oder eine Straßenbahn handeln kann. Bevorzugt handelt es sich bei dem Fahrzeug aber um ein Straßenfahrzeug, wie einen PKW, Lastkraftwagen, Bus oder ein Funktionsfahrzeug (wie eine Müllabfuhrfahrzeug oder Baufahrzeug). Ganz besonders bevorzugt handelt es sich bei dem Fahrzeug um einen PKW oder Lastkraftwagen.

Im Weiteren wird die vorliegende Erfindung anhand einiger Beispiele näher illustriert, die jedoch nicht als in irgendeiner Weise beschränkend auf den Schutzumfang der Anmeldung verstanden werden sollten:

### Beispiel 1:

Schläuche mit einem Aufbau Elastomer/Verstärkungsschicht/Elastomer wurden mit verschiedenen Materialen und Kombinationen hergestellt. Untersucht wurden insbesondere Schläuche mit einem Aufbau HNBR/AR/HNBR, NBR/AR/CR und AEM/AR/AEM, wobei es sich bei AR um ein Aramidgewebe handelt und die Abkürzungen NBR für Acrylnitrilkautschuk, CR für Chloroprenkautschuk und AEM um einen Ethylen-Acrylnitril-Kautschuk handelt. Die hergestellten Schläuche wiesen einen Innendurchmesser von 18 mm und eine Wanddicke von 3 mm auf.

Zur Bestimmung einer Dichtigkeit gegenüber dielektrischen Wärmeübertragungsfluiden wurden die Schläuche mit Fluid gefüllt und für einen Zeitraum von 21 Tagen bei 60°C gelagert. Die Ergebnisse dieser Lagerungstests sind in der folgenden Tabelle 1 wiedergegeben.

**Tabelle 1**

| Fluid | HNBR/AR/HNBR | NBR/AR/CR | AEM/AR/AEM |
|---|---|---|---|
| Envirotemp^{™} 200 (Cargill Inc.) | ok | ok | eine Probe nicht ok |
| MIDEL ICE (M&I Materials Inc.) | ok | ok | beide Proben nicht ok |
| NOVEC TM 7000 (3M) | ok | ok | eine Probe nicht ok |
| MIVOLT DF7 (M&I Materials Inc.) | ok | ok | beide Proben nicht ok |
| Shell Diala S4 ZX-1 | ok | ok | eine Probe nicht o.k. |

Für die Schläuche mit einer Konstruktion AEM/AR/AEM wurde nach der Lagerung auf der Außenoberfläche des Schlauchs ein deutliches Glänzen beobachtet, was einen Durchtritt von Wärmeübertragungsfluid durch den Schlauch anzeigt. Die aus HNBR/AR/HNBR und NBR/AR/CR gebildeten Schläuche zeigten kein Glänzen.

Nach den Tests wurden weiterhin die Shore A Härte, Zugfestigkeit, die Dehnung, und die Weiterreißfestigkeit der gelagerten Schläuche bestimmt nach DIN ISO 48-4-2021, DIN 53504-2017 und DIN ISO 34-1-2016. Die ermittelten Werte sind im Vergleich zu dem Schlauch ohne Lagerung mit Wärmeübertragungsfluid in der folgenden Tabelle 2 wiedergegeben:

**Tabelle 2**

| **HNBR/AR/HNBR** | | | | | | |
|---|---|---|---|---|---|---|
| | unbehand elt | MID EL ICE* | NOVE C* | MIVOL T* | ENVIROTE MP* | Shell Diala * |
| Shore A | 72 | 75 | 73 | 73 | 74 | 75 |
| Zugfestigkeit [MPa] | 21,9 | 21,9 | 22,6 | 21,6 | 21,6 | 21,7 |
| Dehnung [%] | 308 | 283 | 271 | 228 | 269 | 284 |
| Weiterreißwiders tand [N/mm] | 7,3 | 7,5 | 7,9 | 7,5 | 6,5 | 6,8 |

| **NBR/AR/CR** | | | | | | |
|---|---|---|---|---|---|---|
| | unbehand elt | MID EL ICE | NOVE C | MIVOL T | ENVIROTE MP | Shel l Dial a |
| Shore A | 72 | 72 | 75 | 69 | 66 | 75 |
| Zugfestigkeit [MPa] | 20,2 | 18,9 | 21,3 | 18,3 | 21,4 | 21,1 |
| Dehnung [%] | 414 | 363 | 387 | 363 | 402 | 401 |
| Weiterreißwiders tand [N/mm] | 9,5 | 5,6 | 8,6 | 6,0 | 6,7 | 7,5 |

| **AEM/AR/AEM** | | | | | | |
|---|---|---|---|---|---|---|
| | unbehand elt | MID EL ICE | NOVE C | MIVOL T | ENVIROTE MP | Shel l Dial |
| | | | | | | a |
| Shore A | 68 | 52 | 69 | 55 | 58 | 65 |
| Zugfestigkeit [MPa] | 20,5 | 11,6 | 20,5 | 15,9 | 15,1 | 20,0 |
| Dehnung [%] | 247 | 167 | 157 | 224 | 217 | 263 |
| Weiterreißwiders tand [N/mm] | 3,8 | 1,1 | 3,3 | 1,6 | 2,3 | 3,8 |

| | | | | | | |
|---|---|---|---|---|---|---|
| * Gleiche Substanz wie in Tabelle 1 | | | | | | |

Wie aus der Tabelle 2 ersichtlich ist, zeigt die Schlauchkonstruktion aus HNBR/AR/HNBR den besten Erhalt der mechanischen Eigenschaften. Bei dem Schlauchsystem aus NBR/AR/CR wurde deutlichere Abweichungen /Verschlechterungen und bei AEM/AR/AEM zum Teil nicht mehr akzeptable Abweichungen festgestellt.

Für alle Schläuche wurde zudem die Wassereintrittsrate (gemäß SAE J 3062-2021) bestimmt. Dabei zeigten die Schläuche auf Basis von HNBR/AR/HNBR und NBR/AR/CR nur einen geringen Wassereintritt von etwa 0,21 g/cm²/Jahr bzw. 0,185 g/cm²/Jahr, gegenüber dem der AEM/AR/AEM Schlauch mit 0,43 g/cm²/Jahr deutlich abfällt.

## Patentansprüche

1. Schlauch für ein Batteriekühlsystem ein umfassend eine innere Schicht aus hydriertem Acrylnitrilbutadienkautschuk, eine Zwischenschicht aus Verstärkungsfasern oder Verstärkungsgewebe und eine äußere Schicht aus hydriertem Acrylnitrilbutadienkautschuk.

2. Schlauch gemäß Anspruch 1, wobei die Verstärkungsfasern oder das Verstärkungsgewebe ein Polyamid, bevorzugt ein aromatisches Polyamid, enthalten und vorzugsweise aus einem solchen Polyamid gebildet sind.

3. Schlauch gemäß Anspruch 1 oder 2, wobei der hydrierte Acrylnitrilbutadienkautschuk der inneren und/oder der äußeren Schicht eine oder mehrere der folgenden Eigenschaften aufweist: (i) einen Acrylnitrilgehalt im Bereich von 25 bis 45 Gew.-% und bevorzugt 35 bis 45 Gew.-%; (ii) einen Sättigungsgrad, bestimmt als lodwert in mg/100 mg Kautschuk im Bereich von 3 bis 30; (iii) eine Glasübergangstemperatur im Bereich von -40 °C bis -20 °C.

4. Schlauch gemäß mindestens einem der Ansprüche 1 bis 3, wobei die innere und/oder äußere Schicht zusätzlich ein oder mehrere Additive ausgewählt aus Füllstoffen, insbesondere in Form von Ruß, Zinkoxid, Antioxidationsmittel, Vernetzern, und Weichmachern enthält.

5. Schlauch gemäß Anspruch 4, wobei die innere und/oder äußere Schicht 20 bis 150 phr Füllstoff, insbesondere Ruß, und 5 bis 30 phr an weiteren Additiven enthält.

6. Schlauch gemäß mindestens einem der vorangehenden Ansprüche, wobei die innere und/oder äußere Schicht vernetzt und vorzugsweise peroxidvernetzt ist.

7. Schlauch gemäß mindestens einem der vorangehenden Ansprüche, wobei der Schlauch einen Innendurchmesser in Bereich von 5 bis 25 mm und bevorzugt 7 bis 20 mm und/oder eine Wanddicke von 2 bis 5 mm und bevorzugt 3 bis 4 mm aufweist.

8. Schlauch gemäß mindestens einem der vorangehenden Ansprüche, wobei der Schlauch ausschließlich aus der inneren Schicht aus hydriertem Acrylnitrilbutadienkautschuk, der Zwischenschicht aus Verstärkungsfasern oder Verstärkungsgewebe und der äußeren Schicht aus hydriertem Acrylnitrilbutadienkautschuk gebildet ist und/oder eine Wassereintrittsrate (bestimmt gemäß SAE J 3062-2021) von weniger als 0,4 g/cm²/Jahr und insbesondere weniger als 0,3 g/cm²/Jahr aufweist.

9. Verwendung eines Schlauchs gemäß einem der Ansprüche 1 bis 8 in einem Batteriekühlsystem, wobei ein Wärmeübertragungsfluid durch den Schlauch geleitet wird.

10. Batterie umfassend mindestens eine Batteriezelle und ein Batteriekühlsystem mit einer Pumpe, einem Wärmetauscher und mindestens einem Schlauch gemäß einem der Ansprüche 1 bis 8.

11. Batterie gemäß Anspruch 10, wobei das Batteriekühlsystem mit einem Wärmeübertragungsfluid gefüllt ist, das vorzugsweise ausgewählt ist aus dielektrischen Ölen, weiter bevorzugt aus aromatischen synthetischen dielektrischen Ölen, Pentaerythritolestern mit geradkettigen oder verzweigten C5 bis C12-Carbonsäuren, Methoxyheptafluorpropan, oder gas-to-liquid-synthetischen Ölen, insbesondere in Form von verzweigten, zyklischen und/oder linearen C18 bis C50-Kohlenwasserstoffen.

12. Batterie gemäß Anspruch 10 oder 11, wobei es sich bei der Batterie um eine Alkalimetallionenbatterie und bevorzugt um eine Lithiumionenbatterie handelt.

13. Batterie gemäß mindestens einem der Ansprüche 10 oder 12, wobei das Batteriekühlsystem so ausgestaltet ist, dass die mindestens eine Batteriezelle während des Betriebs des Batteriekühlsystems von dem Wärmeübertragungsfluid umströmt wird.

14. Fahrzeug umfassend mindestens eine Batterie gemäß einem der Ansprüche 10 bis 13.
